(19) Europäisches Patentamt
European Patent Office
Office européen des brevets

(11) **EP 2 706 596 B1**

(12) **EUROPEAN PATENT SPECIFICATION**

(45) Date of publication and mention
of the grant of the patent:
**15.11.2017 Bulletin 2017/46**

(51) Int Cl.:
*H01M 4/134* $^{(2010.01)}$       *H01M 4/36* $^{(2006.01)}$
*H01M 4/38* $^{(2006.01)}$       *H01M 10/0525* $^{(2010.01)}$

(21) Application number: **13183241.2**

(22) Date of filing: **05.09.2013**

(54) **Negative electrode material for lithium ion batteries**

Material für Negative Elektrode für Lithiumionenbatterien

Matériau d'électrode négative pour batteries lithium-ion

(84) Designated Contracting States:
**DE FR GB IT**

(30) Priority: **06.09.2012 JP 2012196051**

(43) Date of publication of application:
**12.03.2014 Bulletin 2014/11**

(73) Proprietor: **Shin-Etsu Chemical Co., Ltd.**
**Chiyoda-ku,**
**Tokyo (JP)**

(72) Inventors:
• **Shinya, Naofumi**
**Echizen-shi, Fukui (JP)**
• **Minowa, Takehisa**
**Echizen-shi, Fukui (JP)**

(74) Representative: **Stoner, Gerard Patrick et al**
**Mewburn Ellis LLP**
**City Tower**
**40 Basinghall Street**
**London EC2V 5DE (GB)**

(56) References cited:
**US-A1- 2005 031 957     US-A1- 2007 020 522**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This invention relates to a negative electrode material for lithium ion batteries, especially useful in high-capacity applications.

BACKGROUND

Prior art storage batteries including lead storage batteries, Ni-Cd batteries and nickel-hydrogen batteries perform charge/discharge operation on the basis of ionization reaction of hydrogen ($H \rightarrow H^+ + e^-$) and migration of proton in aqueous electrolyte whereas lithium ion batteries carry out charge/discharge operation on the basis of ionization of lithium ($Li \rightarrow Li^+ + e^-$) and migration of resultant lithium ions.

These lithium ion batteries allow for discharge at a higher voltage than the prior art storage batteries since lithium metal has a potential of 3 volts relative to the standard oxidation-reduction potential. In addition, lithium responsible for oxidation-reduction is lightweight, which combined with the high discharge voltage, provides for an energy density per unit weight surpassing that of the prior art storage batteries.

Due to the lightweight and high capacity advantages, the lithium ion batteries are widely used in currently wide-spreading mobile equipment which require storage batteries for operation, typically laptop computers and mobile phones. The lithium ion batteries now find an ever expanding application field toward the region where large current discharge is necessary on outdoor use, such as power tools, hybrid cars and electric vehicles.

To make electric vehicles and electric motorcycles practically acceptable, their travel distance must be extended. Thus batteries must have a higher capacity. The capacity of lithium ion batteries, however, can be increased to 372 mAh/g at maximum since the mainstream of the negative electrode material currently used therein is graphite. Under the circumstances, metallic materials such as metallic silicon (Si) and metallic tin (Sn) are investigated as a new negative electrode material. Since the theoretical capacity (4200 mAh/g) of silicon is at least 10 times greater than that of graphite, many engineers made research efforts on silicon.

Metallic silicon, however, undergoes substantial expansion and contraction upon charge/discharge cycles, which causes powdering and disconnection of conductive networks, reducing the cycle life. Addressing the problem, engineers made a study on alloying and mechanical alloying for amorphizing (see JP 4752996 and JP 4789032), but fail in mass-scale manufacture. This is because the mechanical alloying technology is intended to prepare small amounts of samples at the laboratory level and thus incompatible with mass-scale production.

US2007/0020522A discloses alloy compositions for the anodes of lithium ion batteries. The compositions contain 35 to 70 mol% Si, 1 to 45 mol% Al, 5 to 25 mol% transition metal, 1 to 15 mol % Sn, up to 15 mol% In and 2 to 15 mol% of Y, lanthanide or actinide ("sixth element"). The alloy composition is a mixture of an amorphous phase containing the silicon and a nanocrystalline phase, substantially free of silicon, containing an intermetallic compound including the tin, indium and sixth element. Specific melt processing methods including very rapid quenching to assure the amorphous phase of the Si are disclosed. The Al is also in the amorphous phase.

THE INVENTION

An object of the invention is to provide a negative electrode material of silicon-based alloy system for lithium ion batteries. Preferred embodiments may have benefits of high capacity and/or long cycle life.

The inventors have found that when an alloy composed of Si, transition metal, and Group 4 or 5 metal is modified by substituting In, Sn, Sb, Pb or Mg for a part thereof, a complex alloy of three or more phases in which In, Sn, Sb, Pb or Mg phase precipitates along boundaries of grains of Si single phase-Si alloy phase is obtained; and that when this complex alloy is used as the negative electrode material to construct a lithium ion battery, the lithium ion battery is improved in cycle life.

In one aspect as set out in claim 1, the invention provides a negative electrode material for lithium ion batteries, which is a complex alloy of at least three phases comprising a composite alloy composed of an Si single phase and an Si-Al-M alloy phase, and an L phase, wherein M is at least one element selected from the group consisting of transition metals and metals of Groups 4 and 5, L is at least one element selected from the group consisting of In, Sn, Sb, Pb and Mg, and the Si single phase is precipitated in network form along the grain boundaries of the Si-Al-M alloy phase.

Other aspects of the invention are negative electrodes and lithium ion batteries using the material, methods of making the material, and use of the material to make a lithium ion battery.

Preferably, the complex alloy consists essentially of 40 to 70 at% of Si, 5 to 25 at% of Al, 10 to 35 at% of M, and 0.5 to 10 at% of L. It is preferred that the complex alloy contains 1 to 20 at% of Ti and 1 to 34 at% of at least one metal selected from the group consisting of transition metals exclusive of Ti and metals of Groups 4 and 5 as M.

Preferably, grains of the Si-Al-M alloy have a grain size of 1 to 500 nm, and the distance between grains of the Si-Al-M alloy in a network structure of the Si single phase is up to 200 nm.

Preferably, the L phase is interspersed among grains of the composite alloy composed of an Si single phase and an Si-Al-M alloy phase.

Typically, the negative electrode material is prepared by the gas atomizing, disk atomizing or roll quenching method and takes the form of particles having an average particle size D50 of up to 10 $\mu$m.

ADVANTAGEOUS EFFECTS

The negative electrode material is an alloy of three or more phases wherein an L phase of In, Sn, Sb, Pb or Mg or a mixture thereof is interspersed along grain boundaries of a composite alloy composed of Si phase and Si-Al-M phase. As to its structure, the composite alloy is a dual-phase alloy having a network structure where Si phase is distributed along boundaries of Si-Al-M alloy grains. The negative electrode material may be used as part of a lithium ion battery with a high capacity and long life owing to the interspersion of the L phase along boundaries of the dual-phase alloy grains. Since the Si phase and Si-Al-M phase have alloyed with the L phase, the material itself is highly conductive in contrast to pure silicon, eliminates a need for conductive treatment or addition of conductive agent, and increases the energy density per volume of a lithium ion battery. Therefore, a lithium ion battery using the negative electrode material is best suited as the lithium ion battery with a high capacity and durability for electric vehicles or the like.

BRIEF DESCRIPTION OF DRAWINGS

FIG. 1 is a TEM photomicrograph showing the structure of the alloy in Example 2.

FIGS. 2A and 2B are a BEI image and a mapping image showing Sn distribution, by EPMA observation of the alloy in Example 2.

FIG. 3 schematically illustrates the phase structure of the alloy in Example 2.

FIG. 4 is a set of schematic diagrams showing in cross-section the electrodes using alloy powders having a different particle size (D50) in Example 2, FIG. 4(A) corresponding to D50 = 15 $\mu$m, FIG. 4(B) corresponding to D50 = 10 $\mu$m, and FIG. 4(C) corresponding to D50 = 3.8 $\mu$m.

FIG. 5 is a graph showing electrode density versus particle size for the alloy in Example 2.

FURTHER EXPLANATIONS; OPTIONS AND PREFERENCES

The negative electrode material for lithium ion batteries in one embodiment of the invention is a complex alloy of at least three phases comprising a composite alloy composed of an Si single phase and an Si-Al-M alloy phase, and an L phase. The complex alloy contains Si, Al, M, and L as constituent elements. Herein, M is one or more elements selected from among transition metals, Group 4 metals, and Group 5 metals, and L is one or more elements selected from among In, Sn, Sb, Pb, and Mg.

The critical feature of the alloy material that constitutes the negative electrode material is the precipitation of a Si phase and L phase in the alloy, provided that L is one or more elements selected from among In, Sn, Sb, Pb, and Mg. Herein Si is a negative electrode active material or predominant component of the negative electrode material. When a lithium ion battery is constructed and operated in charge/discharge cycles, lithium ions are withdrawn from the positive electrode active material and embedded into the negative electrode active material during charging. If the negative electrode active material is graphite having a layer structure, lithium ions are intercalated between layers in the form of $LiC_6$. In contrast, lithium ions are taken into the Si phase via alloying in the form of $Li_{4.4}Si$, but little into the Si-Al-M alloy phase which has been alloyed. It is thus recognized that absent Si alone in the alloy, the alloy material does not function as negative electrode.

Based on this recognition, the alloy composition should preferably have a Si content of 40 to 70 at%, more preferably 50 to 70 at%, and even more preferably 55 to 65 at%. An Si content of less than 40 at% means that the alloy material contains little Si alone and may not function as negative electrode. With an Si content in excess of 70 at%, the Si phase may not maintain the network structure in the alloy material, leading to a short life.

On the other hand, In, Sn, Sb, Pb, and Mg of the L phase are relatively soft metals which have a low melting point and are unlikely to form an intermetallic compound with Si and transition metals. Thus, these metals are precipitated along grain boundaries when the melt is solidified. In general, if the Si single phase is present alone, it may undergo a volume change due to alloying reaction with Li. This invites powdering, with a loss of function. The invention intends to inhibit powdering by combining the Si phase with Si-Al-M-L to form a complex alloy of network structure, and to provide for stress relaxation by interspersing a single phase of relatively soft metal L: In, Sn, Sb, Pb or Mg among alloy grain boundaries.

The proportion of the L phase is preferably 0.5 to 10 at%, more preferably 2 to 8 at%, and even more preferably 3 to 6 at% of the complex alloy. If the proportion of the L phase is less than 0.5 at%, the stress relaxation effect mentioned above becomes insufficient, allowing powdering or separation to take place upon expansion and contraction due to occlusion/release of lithium ions during charge/discharge cycles. If the proportion of the L phase exceeds 10 at%, the proportion of Si alloy as the primary phase is accordingly reduced, which may invite a drop of capacity and other drawbacks.

Preferably, the L phase is present interspersed among grains of the composite alloy consisting of Si single phase and Si-Al-M alloy phase. The presence of a proper amount of the L phase in such morphology ensures to exert the stress relaxation effect mentioned above.

Aluminum (Al) is an element that forms a Si-Al base alloy phase and provides for electric conduction. The alloy composition should preferably have an Al content of 5 to 25 at%, more preferably 8 to 18 at%, and even more preferably 10 to 16 at%. An Al content of less than 5 at% may make it difficult to form sufficient crystal grains of Si-Al base alloy phase and hence, to maintain conductivity whereas an Al content in excess of 25 at% may interfere with Si single phase formation.

The metal element M is one or more elements selected from transition metals and metals of Groups 4 and 5 in the Periodic Table. Suitable transition metals include Sc, Cr, Mn, Fe, Co, Ni, Cu, Y, Mo, Tc, Ru, Rh, Pd, Ag, lanthanoid elements such as La and Ce, W, Re, Os, Ir, Pt, and Au. Of these, Fe, Ni, Co, and Mn are preferred. Suitable metal elements of Groups 4 and 5 in the Periodic Table include Ti, V, Zr, Nb, Hf, and Ta. Of these, Ti, V, Zr, Nb, and Ta are preferred.

The alloy composition should preferably contain 10 to 35 at%, more preferably 15 to 35 at%, and even more preferably 20 to 30 at% of metal element M. An M content of less than 10 at% may make it difficult to prevent segregation of Si (or difficult refinement of Si phase), leading to degraded durability of the negative electrode material against charge/discharge cycles of a lithium ion battery. An M content in excess of 35 at% may interfere with Si single phase formation.

The alloy composition preferably contains 1 to 20 at% of Ti and 1 to 34 at% of one or more elements selected from the transition metals exclusive of Ti and metals of Groups 4 and 5, as the metal element M, although this is not critical.

Since the Si-Al-M alloy contains 40 to 70 at% of Si, a conventional melting process allows an excess of Si to be separated and precipitated during casting and results in large grains having the structure of two or more phases including Si phase. If the alloy material is rapidly solidified or quenched, a fine structure of two or more phases can be produced. The grain size of the structure largely varies with the content of Group 4 and 5 elements (in the Periodic Table) in the Si-Al-M alloy. This grain size largely governs the cycle life of a lithium ion battery when the alloy material is used as the negative electrode material. As the grain size of the structure becomes finer, the cycle life becomes longer. In this regard, it is effective to add titanium (Ti) to the alloy structure. Specifically addition of 1 to 20 at% of Ti facilitates refinement. Although the refinement mechanism is not well understood, Ti addition combined with quenching results in a finer structure than the addition of other elements of Groups 4 and 5. Notably a Ti content of less than 1 at% may achieve no or little addition effect, whereas a Ti content in excess of 20 at% may result in an Si-Al-M alloy having too high a melting point to melt. The Ti content is more preferably in a range of 6 to 18 at%, and even more preferably 8 to 16 at%.

Where 1 to 20 at% of Ti is contained, at least one element selected from the other transition metals and metals of Groups 4 and 5 is preferably Fe, Co, Ni, Cu, V, Zr or a mixture thereof though not limited thereto. Inclusion of one or more such transition metals or metals of Groups 4 and 5 along with Ti ensures to produce an alloy having a fine network structure with Si phase precipitated. The content of transition metals (exclusive of Ti) and metals of Groups 4 and 5 is more preferably in a range of 5 to 25 at%, and even more preferably 8 to 20 at%.

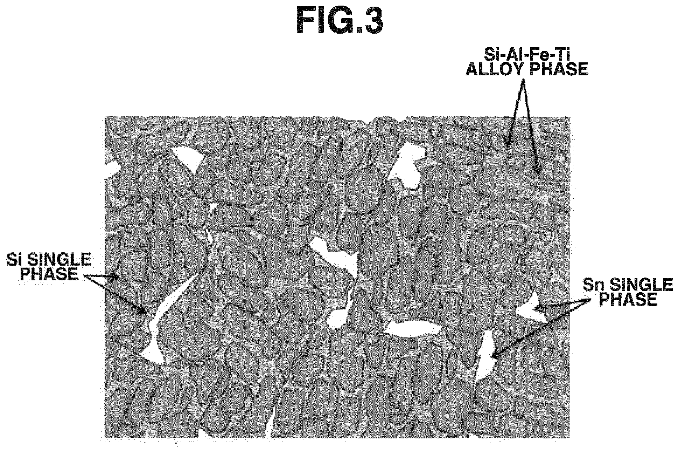

The alloy material constituting the lithium ion battery negative electrode material is a complex alloy of at least three phases comprising a composite alloy of network structure having the Si single phase precipitated along boundaries of fine crystal grains of Si-Al-M alloy phase (M is Fe-Ti in FIG. 3) and the L phase (L is Sn in FIG. 3) interspersed among grains of the composite alloy, as shown in FIG. 3.

The crystal grains of Si-Al-M alloy phase preferably have a grain size of 1 to 500 nm, more preferably 20 to 300 nm, and even more preferably 30 to 200 nm. A grain size of less than 1 nm may interfere with occlusion/release of lithium ions and make it difficult to provide a lithium ion battery with a high capacity. If the grain size exceeds 500 nm, powdering or separation of Si phase may occur upon expansion and contraction due to occlusion/release of lithium ions, and the durability of the negative electrode material against charge/discharge cycles of a lithium ion battery may be degraded.

The networks of Si phase result from precipitation of Si phase at the boundary between crystal grains. The fine networks of Si phase are uniformly exposed in a relatively large proportion on the surface of the alloy material.

The width of networks of Si single phase, that is, the distance between crystal grains is preferably up to 200 nm, more preferably 1 nm to 200 nm. If the distance between crystal grains is less than 1 nm, then it may be difficult to provide a lithium ion battery with a high capacity. If the distance between crystal grains exceeds 200 nm, then the Si single phase region may undergo substantial expansion and contraction during charge/discharge cycles, which causes powdering and formation of conductive paths to the collector, adversely affecting the cycle life.

The alloy material constituting the lithium ion battery negative electrode material is preferably prepared by a rapid solidification or quenching process. More particularly, metal ingredients (single metals or alloys) corresponding to the constituent elements are weighed in accordance with the desired composition, fed into a crucible or suitable vessel, and melted by high-frequency induction heating, resistance heating or arc melting. The melt is cast into a mold to form an alloy ingot, which is melted again and rapidly solidified by gas atomization, disk atomization or chill roll quenching. There is obtained an alloy material having the desired crystalline structure. Although the melting process is not particularly limited, the rapid solidification process is preferred in producing the three-phase alloy material having a fine crystalline structure according to the invention.

The resulting alloy material is preferably powdered by mechanical grinding. The powdered alloy material is referred to as alloy powder. The grinding method is not particularly limited, and any of grinding machines including mortar, roll mill, hammer mill, pin mill, Brown mill, jet mill, ball mill, bead mill, vibration mill and planetary mill may be used. By a combination of these grinding means, the alloy is preferably ground to an average particle size (D50) of up to 10 $\mu$m, more preferably 8 to 2 $\mu$m. The grinding step is not necessary in the event of atomization wherein a particle size of up to 10 $\mu$m is inherently available.

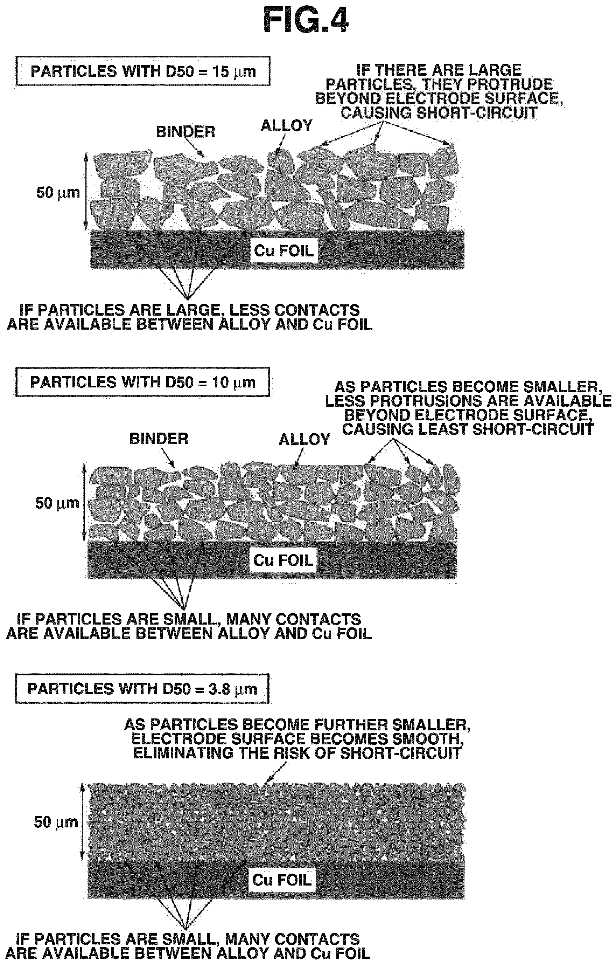

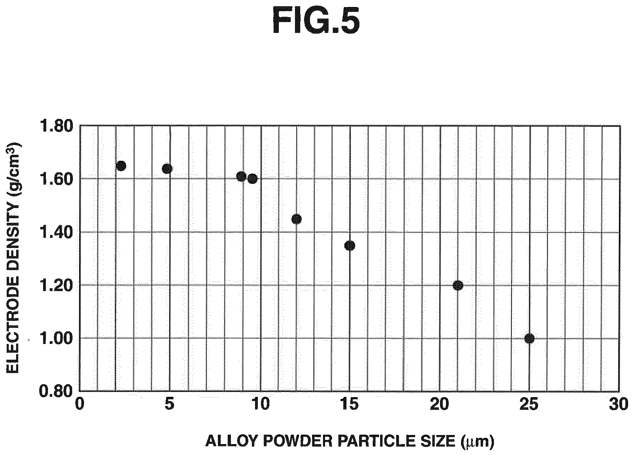

The average particle size of the alloy powder is set to 10 $\mu$m or less for the purposes of improving current collection and preventing short-circuits when the alloy powder is used as the negative electrode material in lithium ion batteries. Since the negative electrode material of the invention has a high capacity, the negative electrode material is typically coated onto a current collector to a thickness of 100 $\mu$m or less, from consideration of a balance with the positive electrode material. As seen from the diagrams of FIGS. 4(A) to 4(C), too large an alloy powder particle size may lead to risks of ineffective coating of powder to the current collector (Cu foil in FIG. 4), reduced current collection, and short-circuit by separator penetration. Also as seen from the electrode density versus alloy powder particle size depicted in the graph of FIG. 5, if the particle size exceeds 10 $\mu$m, then the electrode density is noticeably reduced, leading to a reduced energy density per unit volume. A particle size of up to 10 $\mu$m is also preferable from the aspect of preventing the powder from separating from the current collector due to expansion and contraction on alloying reaction with Li. The average particle size of the alloy powder is set to 1 $\mu$m or more for ease of handling of the powder. It is noted that the average particle size (D50) of the alloy powder is measured by any well-known particle size measurement methods, for example, a particle size distribution measuring instrument based on laser diffractometry.

EXAMPLE

Examples and Comparative Examples are given below by way of illustration and not by way of limitation.

Examples 1 to 5 and Comparative Examples 1 to 3

Metals Si, Al, Fe, Ti, and L were weighed in amounts as shown in Table 1, melted in a resistance heating furnace, and cast into alloy ingots A to G. As shown in Table 1, L was In, Sn, Sb, Pb or Mg, but not added in Comparative Examples.

Table 1

| Sample | Si (at%) | Al (at%) | Fe (at%) | Ti (at%) | L (at%) |
|---|---|---|---|---|---|
| A (Example 1) | 60 | 12 | 10 | 15 | In: 3 |
| B (Example 2) | 60 | 12 | 10 | 15 | Sn: 3 |
| C (Example 3) | 60 | 12 | 10 | 15 | Sb: 3 |
| D (Example 4) | 60 | 12 | 10 | 15 | Pb: 3 |
| E (Example 5) | 60 | 12 | 10 | 15 | Mg: 3 |
| F (Comparative Example 1) | 60 | 15 | 10 | 15 | nil |
| G (Comparative Example 2) | 60 | 20 | 20 | nil | nil |
| H (Comparative Example 3) | 100 | nil | nil | nil | nil |

Each alloy ingot was placed in a quartz nozzle and mounted in a melt quenching single roll unit (Makabe Giken Co., Ltd.) where it was melted in an argon gas atmosphere by high-frequency heating. The molten alloy was injected from the orifice of the nozzle by argon gas jet and impacted against the surface of a rotating chill roll of copper (circumferential speed of 20 m/sec) for rapid solidification. On solidification, the alloy traveled in a rotational direction of the roll and became a quenched thin body in ribbon form.

The quenched thin body was coarsely ground in a stainless steel mortar, classified to a particle size of up to 300 μm, and milled in a ball mill into a powder sample having an average particle size (D50) of 4 μm, designated Samples A to G. A commercially available silicon powder (D50 = 4 μm) was used as Sample H. It is noted that the average particle size of the alloy powder is measured by a particle size distribution measuring instrument based on laser diffractometry (SALD-7000 by Shimadzu Corp.)

1) Charge/discharge test

The powder sample obtained above was mixed with a solution of a polyimide binder in N-methyl-2-pyrrolidone and acetylene black. The slurry was coated onto a cupper current collector and heat dried to form an electrode sheet. Using the electrode sheet, metallic lithium as the counter electrode, and a solution of 1 mol/liter $LiPF_6$ in ethylene carbonate and diethyl carbonate (1/1 by volume) as the electrolyte, a CR2032 coin battery for test was constructed. A charge/discharge test was carried out over 50 cycles under conditions: temperature 20°C, voltage range 0 to 2 volts, and 0.1 C for both charge and discharge. A discharge capacity (mAh per gram of negative electrode material or powder sample) was measured at 1st and 50th cycle, from which a capacity retention was computed as (50th cycle discharge capacity)/(1st cycle discharge capacity) x 100%, abbreviated as "DC@50th/DC@1st" in Tables. The results are shown in Table 2.

Table 2: Charge/discharge test

| Sample | Discharge capacity (mAh/g) | | Capacity retention (DC@50th/DC@1st. %) |
|---|---|---|---|
| | 1st cycle | 50th cycle | |
| A (Example 1) | 950 | 940 | 98.9 |
| B (Example 2) | 1000 | 960 | 96.0 |
| C (Example 3) | 1000 | 962 | 96.2 |
| D (Example 4) | 940 | 921 | 98.0 |
| E (Example 5) | 930 | 880 | 94.6 |
| F (Comparative Example 1) | 850 | 723 | 85.0 |
| G (Comparative Example 2) | 950 | 570 | 60.0 |
| H (Comparative Example 3) | 2750 | 151 | 5.5 |

As seen from Table 2, Examples 1 to 5 containing L phase (In, Sn, Sb, Pb and Mg) show higher values of discharge capacity and capacity retention than Comparative Example 1 not containing L phase. Comparative Example 2 not containing Ti shows noticeably low values of discharge capacity and capacity retention as compared with Examples 1 to 5. Comparative Example 3 consisting of Si single phase shows a high value of initial discharge capacity, but an extremely low capacity retention, indicating that it is unacceptable for use in secondary batteries. Examples 2 and 3 show very high values of 1st cycle discharge capacity because Sn or Sb as the L phase itself has the function of occlusion and release of Li ions as well and contributes to a capacity increase.

2) Structure observation and composition analysis

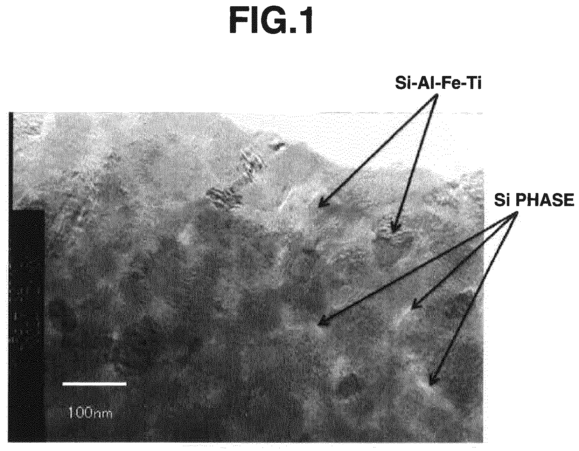

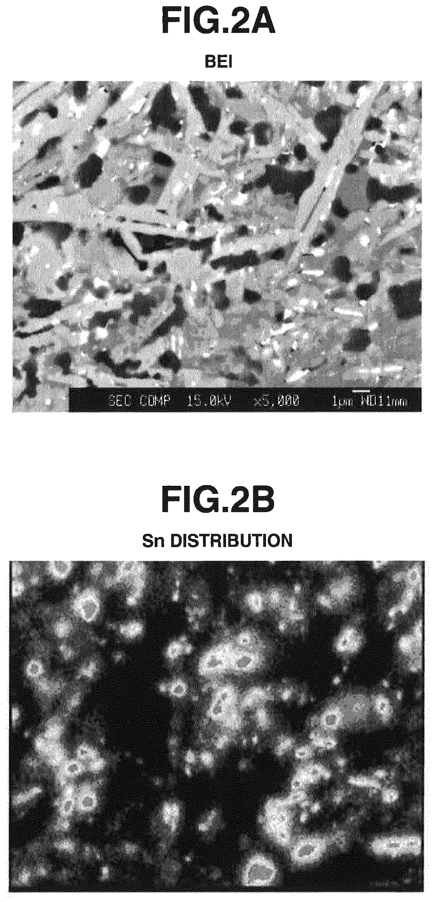

For powder Sample B of Example 2, the structure of the material was observed under transmission electron microscope (TEM) and electron probe microanalyzer (EPMA). FIG. 1 is a TEM image. FIG. 2(A) is a back-scattered electron image (BEI) and FIG. 2(B) is a mapping image showing Sn distribution.

With respect to the Si distribution, the TEM image of FIG. 1 reveals that Si phase is distributed as networks along boundaries of Si-Al-Fe-Ti alloy grains. With respect to the Sn distribution, the EPMA image of FIG. 2 reveals the interspersion of Sn in the alloy. From these observations, the diagram of FIG. 3 is rightly derived that Sn is interspersed (or distributed as sparse spots) along grain boundaries of the composite alloy consisting of Si phase and Si-Al-M (Si-Al-Fe-Ti) phase.

Next, the gray and white regions on structure observation of Sample B in FIG. 1 were analyzed for composition by energy dispersive X-ray spectroscopy (EDX). The results are shown in Table 3.

Table 3: Sample B

| Region observed | Analysis value (wt%) | | | | | Analysis value (at%) | | | | |
|---|---|---|---|---|---|---|---|---|---|---|
| | Si | Al | Fe | Ti | Sn | Si | Al | Fe | Ti | Sn |
| Gray region-1 | 43.94 | 10.68 | 21.93 | 23.45 | 0.00 | 55.0 | 13.9 | 13.8 | 17.2 | 0.0 |
| Gray region-2 | 43.94 | 10.70 | 21.91 | 23.45 | 0.00 | 55.0 | 13.9 | 13.8 | 17.2 | 0.0 |
| Gray region-3 | 45.07 | 13.36 | 24.49 | 17.08 | 0.00 | 55.4 | 17.1 | 15.1 | 12.3 | 0.0 |
| Gray region-4 | 57.55 | 9.68 | 18.77 | 14.00 | 0.00 | 67.5 | 11.8 | 11.1 | 9.6 | 0.0 |
| White region-1 | 100 | 0.00 | 0.00 | 0.00 | 0.00 | 100 | 0 | 0 | 0 | 0 |
| White region-2 | 100 | 0.00 | 0.00 | 0.00 | 0.00 | 100 | 0 | 0 | 0 | 0 |

As seen from the analytical data, the white region consisted of 100% Si. The gray region had an alloy composition of Si-Al-Fe-Ti, where Sn was absent. This is because Sn not contributing to alloying precipitated along grain boundaries of the composite alloy as a single phase. The Si atomic ratio of alloy particles was lower than the bulk composition because Si not contributing to alloying precipitated in the alloy as a single phase.

3) Electrode density versus particle size

In the procedure of preparing the powder sample of Example 2, a plurality of powder samples having a different particle size were prepared while adjusting the grinding conditions. Using these powder samples, a plurality of electrodes were similarly prepared. The density of the electrodes was measured by the following method whereupon the relation of electrode density to particle size of alloy powder was examined. The results are shown in FIG. 5.

[Measurement of electrode density]

Using an electronic force balance (minimum display unit 0.01 mg), the weight of the electrode excluding the weight of collector, conductive agent and binder was determined. Using a micrometer, the thickness of the electrode excluding the thickness of collector was determined. Using these values, the density was computed according to the following equation.

```
density (g/cm³) =

(active material net weight)/{(diameter/2)²*π*thickness}
```

Note that the active material is the negative electrode material.
As seen from the graph of FIG. 5, the electrode density drops when the particle size (D50) of alloy powder exceeds 10 μm.

Examples 6, 7 and Reference Examples 1, 2

As in Examples 1 to 5, alloy powder samples I to L were prepared by weighing amounts (shown in Table 4) of metals Si, Al, Fe, Ti, and Sn and similarly processing. Using the powder samples, CR2032 coin batteries were similarly constructed. A charge/discharge test was similarly performed, with the results shown in Table 5. It is noted that the results of Example 2 are also tabulated in Tables 4 and 5.

Table 4

| Sample | Si (at%) | Al (at%) | Fe (at%) | Ti (at%) | Sn (at%) |
|---|---|---|---|---|---|
| I (Example 6) | 40 | 25 | 20 | 15 | 3 |
| B (Example 2) | 60 | 15 | 10 | 15 | 3 |
| J (Example 7) | 70 | 8 | 7 | 15 | 3 |

(continued)

| Sample | Si (at%) | Al (at%) | Fe (at%) | Ti (at%) | Sn (at%) |
|---|---|---|---|---|---|
| K (Reference Example 1) | 30 | 35 | 20 | 15 | 3 |
| L (Reference Example 2) | 80 | 5 | 5 | 7 | 3 |

Table 5: Charge/discharge test

| Sample | Discharge capacity (mAh/g) | | Capacity retention (DC@50th/DC@1st, %) |
|---|---|---|---|
| | 1st cycle | 50th cycle | |
| I (Example 6) | 650 | 646 | 99.3 |
| B (Example 2) | 1000 | 960 | 96.0 |
| J (Example 7) | 1500 | 1440 | 96.0 |
| K (Reference Example 1) | 300 | 297 | 99.0 |
| L (Reference Example 2) | 1800 | 400 | 22.2 |

As seen from Tables 4 and 5, Reference Example 1 indicates that a Si content of up to 30 at% leads to a satisfactory capacity retention, but a low discharge capacity. Reference Example 2 indicates that a Si content of at least 80 at% leads to a high discharge capacity, but a low capacity retention. This is because a Si content of up to 30 at% results in precipitation of less Si single phase in the alloy, and a Si content of at least 80 at% results in insufficient formation of a network structure of Si-Al-Fe-Ti alloy. A Si content of 40 to 70 at% ensures formation of a composite alloy having a network structure of Si-Al-Fe-Ti alloy and interspersion of Sn along alloy grain boundaries, achieving a high capacity and capacity retention.

Notes

(1) In respect of numerical ranges disclosed in the present description it will of course be understood that in the normal way the technical criterion for the upper limit is different from the technical criterion for the lower limit, i.e. the upper and lower limits are intrinsically distinct proposals.
(2) For the avoidance of doubt it is confirmed that in the general description above, in the usual way the proposal of general preferences and options in respect of different features of the negative electrode material, negative electrode, lithium ion battery, method and use constitutes the proposal of general combinations of those general preferences and options for the different features, insofar as they are combinable and compatible and are put forward in the same context.

**Claims**

1.  A negative electrode material for lithium ion batteries, which is a complex alloy of at least three phases, comprising:

    a composite alloy, composed of

    - an Si single phase and
    - an Si-Al-M alloy phase, wherein M is at least one element selected from the group consisting of transition metals and metals of Groups 4 and 5,

    and
    an L phase where L is at least one element selected from the group consisting of In, Sn, Sb, Pb and Mg;

    the Si single phase being precipitated in network form along the grain boundaries of the Si-Al-M alloy phase.

**2.** The negative electrode material of claim 1 wherein the complex alloy comprises 40 to 70 at% of Si, 5 to 25 at% of Al, 10 to 35 at% of M and 0.5 to 10 at% of L.

**3.** The negative electrode material of any one of the preceding claims wherein the complex alloy composition has an Si content of 50 to 70 at%.

**4.** The negative electrode material of any one of the preceding claims wherein the complex alloy composition has an Al content of 8 to 18 at%.

**5.** The negative electrode material of any one of the preceding claims wherein the complex alloy composition contains 15 to 35 at% of metal element M.

**6.** The negative electrode material of any one of the preceding claims wherein M is selected from Ti, V, Zr, Nb, Ta, Fe, Ni, Co and Mn.

**7.** The negative electrode material of any of the preceding claims wherein the complex alloy contains 1 to 20 at% of Ti and 1 to 34 at% of at least one metal selected from the group consisting of transition metals exclusive of Ti and metals of Groups 4 and 5 as M.

**8.** The negative electrode material of any one of the preceding claims wherein the Ti content of the complex alloy is 6 to 18 at%.

**9.** The negative electrode material of any one of the preceding claims wherein grains of the Si-Al-M alloy have a grain size of 1 to 500 nm, and the distance between grains of the Si-Al-M alloy in the network structure of the Si single phase is up to 200 nm.

**10.** The negative electrode material of any one of the preceding claims wherein the crystal grains of Si-Al-M alloy phase have a grain size of 20 to 300 nm.

**11.** The negative electrode material of any one of the preceding claims wherein the L phase is interspersed among grains of the composite alloy composed of the Si single phase and Si-Al-M alloy phase.

**12.** The negative electrode material of any one of the preceding claims wherein the proportion of the L phase is 2 to 8 at% of the complex alloy.

**13.** The negative electrode material of any one of the preceding claims which is in the form of particles having an average particle size D50 of up to 10 $\mu$m.

**14.** A negative electrode comprising a negative electrode material of any one of claims 1 to 13.

**15.** A lithium ion battery comprising a negative electrode comprising a negative electrode material of any one of claims 1 to 13.

**16.** A method of making a negative electrode material of any one of claims 1 to 13, comprising melting metal ingredients corresponding to the constituent elements of the material.

**17.** The method of claim 16 further comprising casting the melt into a mold to form an alloy ingot, melting the alloy ingot again, and rapidly solidifying the melt.

**18.** The method of claim 17 wherein rapidly solidifying the melt comprises gas atomisation, disk atomisation or chill roll quenching.

**19.** Use of a negative electrode material of any one of claims 1 to 13 to make a lithium ion battery.

**Patentansprüche**

**1.** Negatives Elektrodenmaterial für Lithiumionenbatterien, das eine Komplexlegierung aus zumindest drei Phasen ist und Folgendes umfasst:

eine Verbundlegierung bestehend aus

- einer Si-Einzelphase und
- einer Si-Al-M-Legierungsphase, worin M zumindest ein Element ausgewählt aus der aus Übergangsmetallen und Metallen der Gruppen 4 und 5 bestehenden Gruppe ist,

und

eine L-Phase, worin L zumindest ein Element ausgewählt aus der aus In, Sn, Sb, Pb und Mg bestehenden Gruppe ist;

wobei die Si-Einzelphase in Netzform entlang der Korngrenzen der Si-Al-M-Legierungsphase ausgefällt ist.

2. Negatives Elektrodenmaterial nach Anspruch 1, worin die Komplexlegierung 40 bis 70 Atom-% Si, 5 bis 25 Atom-% Al, 10 bis 35 Atom-% M und 0,5 bis 10 Atom-% L umfasst.

3. Negatives Elektrodenmaterial nach einem der vorangegangenen Ansprüche, worin die Komplexlegierungszusammensetzung einen Si-Gehalt von 50 bis 70 Atom-% aufweist.

4. Negatives Elektrodenmaterial nach einem der vorangegangenen Ansprüche, worin die Komplexlegierungszusammensetzung einen Al-Gehalt von 8 bis 18 Atom-% aufweist.

5. Negatives Elektrodenmaterial nach einem der vorangegangenen Ansprüche, worin die Komplexlegierungszusammensetzung 15 bis 35 Atom-% des Metallelements M enthält.

6. Negatives Elektrodenmaterial nach einem der vorangegangenen Ansprüche, worin M aus Ti, V, Zr, Nb, Ta, Fe, Ni, Co und Mn ausgewählt ist.

7. Negatives Elektrodenmaterial nach einem der vorangegangenen Ansprüche, worin die Komplexlegierungszusammensetzung 1 bis 20 Atom-% Ti und 1 bis 34 Atom-% zumindest eines Metalls ausgewählt aus der aus Übergangsmetallen mit Ausnahme von Ti und Metallen der Gruppen 4 und 5 bestehenden Gruppe als M enthält.

8. Negatives Elektrodenmaterial nach einem der vorangegangenen Ansprüche, worin der Ti-Gehalt der Komplexlegierung 6 bis 18 Atom-% beträgt.

9. Negatives Elektrodenmaterial nach einem der vorangegangenen Ansprüche, worin die Körner der Si-Al-M-Legierung eine Korngröße von 1 bis 500 nm aufweisen und der Abstand zwischen den Körnern der Si-Al-M-Legierung in der Netzwerkstruktur der Si-Einzelphase bis zu 200 nm beträgt.

10. Negatives Elektrodenmaterial nach einem der vorangegangenen Ansprüche, worin die Kristallkörner der Si-Al-M-Legierungsphase eine Korngröße von 20 bis 300 nm aufweisen.

11. Negatives Elektrodenmaterial nach einem der vorangegangenen Ansprüche, worin die L-Phase zwischen den Körnern der Verbundlegierung, die aus der Si-Einzelphase und der Si-Al-M-Legierungsphase besteht, eingefügt ist.

12. Negatives Elektrodenmaterial nach einem der vorangegangenen Ansprüche, worin der Anteil der L-Phase 2 bis 8 Atom-% der Komplexlegierung beträgt.

13. Negatives Elektrodenmaterial nach einem der vorangegangenen Ansprüche, das in Form von Teilchen mit einer mittleren Teilchengröße D50 von bis zu 10 $\mu$m vorliegt.

14. Negative Elektrode, die ein negatives Elektrodenmaterial nach einem der Ansprüche 1 bis 13 umfasst.

15. Lithiumionenbatterie, die eine negative Elektrode umfasst, die ein negatives Elektrodenmaterial nach einem der Ansprüche 1 bis 13 umfasst.

16. Verfahren zur Herstellung eines negativen Elektrodenmaterials nach einem der Ansprüche 1 bis 13, das das Schmelzen von Metallinhaltsstoffen umfasst, die den Elementen entsprechen, aus welchen das Material besteht.

17. Verfahren nach Anspruch 16, das weiters das Gießen der Schmelze in eine Form, um einen Legierungsblock zu bilden, das erneute Schmelzen des Legierungsblocks und das rasche Verfestigen der Schmelze umfasst.

18. Verfahren nach Anspruch 17, wobei das rasche Verfestigen der Schmelze Gasatomisierung, Scheibenatomisierung oder Kühlwalzen-Quenchen umfasst.

19. Verwendung eines negativen Elektrodenmaterials nach einem der Ansprüche 1 bis 13 zur Herstellung einer Lithiumionenbatterie.

**Revendications**

1. Matériau d'électrode négative pour batteries lithium-ion, qui est un alliage complexe d'au moins trois phases, comprenant :

   un alliage composite, composé de

   - une phase simple de Si et
   - une phase d'alliage de Si-Al-M, M étant au moins un élément choisi dans le groupe constitué des métaux de transition et des métaux des groupes 4 et 5,

   et
   une phase L où L est au moins un élément choisi dans le groupe constitué de l'In, du Sn, du Sb, du Pb et du Mg ; la phase simple de Si étant précipitée sous la forme d'un réseau le long des limites de grains de la phase d'alliage de Si-Al-M.

2. Matériau d'électrode négative selon la revendication 1 dans lequel l'alliage complexe comprend de 40 à 70 % atomique de Si, de 5 à 25 % atomique d'Al, de 10 à 35 % atomique de M et de 0,5 à 10 % atomique de L.

3. Matériau d'électrode négative selon l'une quelconque des revendications précédentes dans lequel la composition de l'alliage complexe a une teneur en Si de 50 à 70 % atomique.

4. Matériau d'électrode négative selon l'une quelconque des revendications précédentes dans lequel la composition de l'alliage complexe a une teneur en Al de 8 à 18 % atomique.

5. Matériau d'électrode négative selon l'une quelconque des revendications précédentes dans lequel la composition de l'alliage complexe contient de 15 à 35 % atomique de l'élément métallique M.

6. Matériau d'électrode négative selon l'une quelconque des revendications précédentes dans lequel M est choisi parmi le Ti, le V, le Zr, le Nb, le Ta, le Fe, le Ni, le Co et le Mn.

7. Matériau d'électrode négative selon l'une quelconque des revendications précédentes dans lequel l'alliage complexe contient de 1 à 20 % atomique de Ti et de 1 à 34 % atomique d'au moins un métal choisi dans le groupe constitué des métaux de transition à l'exclusion du Ti et des métaux des groupes 4 et 5 en tant que M.

8. Matériau d'électrode négative selon l'une quelconque des revendications précédentes dans lequel la teneur en Ti de l'alliage complexe est de 6 à 18 % atomique.

9. Matériau d'électrode négative selon l'une quelconque des revendications précédentes dans lequel les grains de l'alliage de Si-Al-M ont une taille de grain de 1 à 500 nm, et la distance entre les grains de l'alliage de Si-Al-M dans la structure en réseau de la phase simple de Si va jusqu'à 200 nm.

10. Matériau d'électrode négative selon l'une quelconque des revendications précédentes dans lequel les grains cristallins de la phase d'alliage de Si-Al-M ont une taille de grain de 20 à 300 nm.

11. Matériau d'électrode négative selon l'une quelconque des revendications précédentes dans lequel la phase L est dispersée parmi les grains de l'alliage composite composé de la phase simple de Si et de la phase d'alliage de Si-Al-M.

12. Matériau d'électrode négative selon l'une quelconque des revendications précédentes dans lequel la proportion de la phase L est de 2 à 8 % atomique de l'alliage complexe.

13. Matériau d'électrode négative selon l'une quelconque des revendications précédentes qui est sous la forme de particules ayant une taille moyenne de particule D50 allant jusqu'à 10 $\mu$m.

14. Électrode négative comprenant un matériau d'électrode négative selon l'une quelconque des revendications 1 à 13.

15. Batterie lithium-ion comprenant une électrode négative comprenant un matériau d'électrode négative selon l'une quelconque des revendications 1 à 13.

16. Procédé de fabrication d'un matériau d'électrode négative selon l'une quelconque des revendications 1 à 13, comprenant la fusion d'ingrédients métalliques correspondant aux éléments constitutifs du matériau.

17. Procédé selon la revendication 16 comprenant en outre la coulée de la masse fondue dans un moule pour former un lingot d'alliage, la nouvelle fusion du lingot d'alliage, et la solidification rapide de la masse fondue.

18. Procédé selon la revendication 17 dans lequel la solidification rapide de la masse fondue comprend une atomisation gazeuse, une atomisation par disque ou une trempe sur rouleau froid.

19. Utilisation d'un matériau d'électrode négative selon l'une quelconque des revendications 1 à 13 pour fabriquer une batterie lithium-ion.

# FIG.1

# FIG.2A

BEI

# FIG.2B

Sn DISTRIBUTION

# FIG.3

Si-Al-Fe-Ti ALLOY PHASE

Si SINGLE PHASE

Sn SINGLE PHASE

# FIG.4

PARTICLES WITH D50 = 15 μm

IF THERE ARE LARGE
PARTICLES, THEY PROTRUDE
BEYOND ELECTRODE SURFACE,
CAUSING SHORT-CIRCUIT

BINDER     ALLOY

50 μm

Cu FOIL

IF PARTICLES ARE LARGE, LESS CONTACTS
ARE AVAILABLE BETWEEN ALLOY AND Cu FOIL

PARTICLES WITH D50 = 10 μm

AS PARTICLES BECOME SMALLER,
LESS PROTRUSIONS ARE AVAILABLE
BEYOND ELECTRODE SURFACE,
CAUSING LEAST SHORT-CIRCUIT

BINDER     ALLOY

50 μm

Cu FOIL

IF PARTICLES ARE SMALL, MANY CONTACTS
ARE AVAILABLE BETWEEN ALLOY AND Cu FOIL

PARTICLES WITH D50 = 3.8 μm

AS PARTICLES BECOME FURTHER SMALLER,
ELECTRODE SURFACE BECOMES SMOOTH,
ELIMINATING THE RISK OF SHORT-CIRCUIT

50 μm

Cu FOIL

IF PARTICLES ARE SMALL, MANY CONTACTS
ARE AVAILABLE BETWEEN ALLOY AND Cu FOIL

# FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4752996 B
- JP 4789032 B

- US 20070020522 A